# EUROPEAN PATENT APPLICATION

(11) **EP 1 420 356 A2**
(43) Date of publication of application: **19.05.2004**
(21) Application number: 03256345.4
(22) Date of filing: 08.10.2003
(51) Int. Cl.: G06K 7/00, G06F 3/00

(54) **Information input device with multiple memory card reader**

(30) Priority: 08.10.2002 US 266899
(71) Applicant: Kang, Bryan Kyuseo, Woodland Hills, California 91303 (US); Fauble, Charles L., Canyon Country, California 91387 (US); Dickerman, Robert Henry, Jr., El Segundo, California 90245 (US); Sitalasai, Chatree, La Crescenta, California 91214 (US); Takeda, Toshisada, Simi Valley, California 93063 (US); Thompson, James E., Moorpark, California 93021 (US)
(72) Inventor: Kang, Bryan Kyuseo, Woodland Hills, California 91303 (US); Fauble, Charles L., Canyon Country, California 91387 (US); Dickerman, Robert Henry, Jr., El Segundo, California 90245 (US); Sitalasai, Chatree, La Crescenta, California 91214 (US); Takeda, Toshisada, Simi Valley, California 93063 (US); Thompson, James E., Moorpark, California 93021 (US)
(74) Representative: Every, David Aidan

(57) **Abstract**

A multiple memory card reader is coupled to an information input device. A memory card is inserted in one of a plurality of memory card slots. Information is read from the memory card and transferred to an information input device controller. The information input device controller receives the information and transmits the information to an input/output controller residing within the information input device. The input/output controller receives the information and transmits the information to a computing device.

## Description

### BACKGROUND

The consumer electronics industry continues to require technology that operates at faster speeds, transfers data at faster speeds, and takes up a smaller spatial footprint in the consumer electronics device. The market for consumer electronic devices such as personal computers, laptop computers, personal digital assistants (PDAs), MP3 players, cell phones, Global Positioning Satellite (GPS) devices, and digital cameras continues to grow at a fast rate, and smaller devices with full functionality are desired by consumers.

Due to the demand for smaller consumer electronic devices, a market has been created for small size portable memory cards. The small-size portable memory cards may be utilized to quickly and conveniently save or transfer data from one consumer electronic device to another. For example, a digital camera may store digital images on a portable memory card and this memory card may later be inserted into a personal computer with a memory card reader or adapter, where the personal computer reads the digital images off of the portable memory card.

Memory cards are currently available from a large number of manufacturers and are widely utilized in the consumer electronics marketplace. Current memory card brand names include CompactFlash, CompactFlashII, Smart Media, Secure Digital, Multi-Media Card, Memory Stick, Memory Stick Duo, and Micro Drive. Compact Flash and CompactFlashII both utilize the same connector slot in a memory card reader because of common size attributes, and SmartMedia and Secure Digital both use the same connector slot in a memory card reader because of common size attributes. Memory cards follow industry standards or proprietary designs such as the PC (or PCMCIA) Card, the CompactFlash Card, Card-Bus card, Miniature Cards, Solid State Floppy Disk Cards (SSFDCs), Multi-Media Cards (MMC), Memory Stick/Memory Stick Duo and MicroDrive. The different industry standards or proprietary designs each have different electrical and physical characteristics.

Memory cards may utilize dynamic random access memory static random access memory (SRAM), read only memory (ROM), Flash, NAND Flash, NOR Flash, or other similar technologies to store information.

Flash PC cards are compliant with the Personal Computer Memory International Association ("PCMCIA"). The physical form factor of PCMCIA cards is 85.6 mm by 54 mm (3.37 inches by 2.126 inches), with a thickness of 3 mm for Type 1 cards and 5 mm for Type 2 cards. The connector specified for the PCMCIA cards utilizes 68 pins, formed of two rows of 34 pins.

The CompactFlash and CompactFlashII card, developed by SanDisk Corporation, has a physical form factor of 36 x 43 mm with a thickness of 3.3 mm, which is approximately 1/3 the size area of the PCMCIA cards. The card has a 50-pin connector that is a subset of the PCMCIA card's 68-pin connector. The IBM Micro Drive has the same form factor as the CompactFlashII memory card.

The solid state floppy disk card, i.e., SmartMedia, ("SSFDC"), developed by Toshiba, has a form factor of 45 x 37 mm with a thickness of 0.76 mm. The SSFDC has 22 flat contact pads, with some being input/output pads for both address and data input and output along with command inputs. The SSFDC utilizes Flash memory. The SSFDC is interfaced to computing devices that have a standard PC card interface with a special PC card adapter.

The MultiMediaCards (MMC), developed by Siemens, has a form factor of 37 x 45 mm with a thickness of 1.4 mm. Its surface area is about 35% of the standard PC card. The MMC card has six edge-mounted contact pads, and utilizes a serial bus for communications. The MMC has ROM or Flash Memory. The Secure Digital ("SD") Card is a flash memory card that provides secure storage for handheld devices such as cellphones and PDAs. The SD Card uses the same 32 x 24mm form factor as the MultiMediaCard, but is slightly thicker (2.1mm rather than 1.4mm). Although its encryption capability supports security and content protection applications, its initial usage has been mostly regular storage due to its fast transfer rate (10 Mbytes/sec) and high storage capacities (128MB in 2001). The SD Card also has a physical slide switch located on the slide of the card to enable write protection.

The Memory Stick or Memory Stick Duo, developed by Sony, is a flash memory card designed for handheld digital appliances such as cameras and camcorders. The Memory Stick has 4 and 8MB capacities. The Memory Stick's physical form factor is less than 1" x 2" and about a tenth of an inch thick (.85" x 1.97" x .11"). Transfer to a computing device may be made via a PC Card adapter or Memory Stick drive.

The IBM Microdrive has 170MB and 340MB capacities. The MicroDrive's physical form factor is 42.8 cm by 36.4 x 5.0 mm. The Microdrive has been designed with the industry-standard CF Type II interface.

Thus, the memory cards in the marketplace have different physical (form factor) and electrical characteristics. Because no one supplier is dominant, manufacturers must prepare for the possibility that users may utilized multiple memory card formats.

In many cases, a memory card reader or adapter is installed in the computing device itself. Adapters allow a memory card to be placed in an adapter housing, which is then installed in a reader that can accommodate the adapter, such as a floppy disk drive. Because computer device manufacturers are minimizing the size of the actual computing device, it may be preferable in many applications to locate the memory card reader outside of the body of the computing device.

U.S. Patent No. 5,841,424 to Kininis discloses a keyboard or input device interfaced with a computing device utilizing the Universal Serial Bus protocol. The keyboard or input device includes physical engagement interfaces and electrical connectors for supporting multiple serial-compatible peripheral devices, such as a music player, a personal digital assistant (PDA) and an electronic pen recorder. Even though the music player or PDA may contain a memory card, the memory card reader is not integrated with the input device.

U.S. Patent No. 6,312,175 to Lum discloses an integrated keyboard input device, utilized in point-of-sale applications, which is integrated with one or more optical scanners and a smart card reader. U.S. Patent No. 6,056,192 to McAuliffe et al., discloses a computer keyboard console that includes an integral card reader slot, with can either be used by a barcode reader, a magnetic/memory card reader, or a "smart card" reader, that allows a user to insert a card, such as one a with encoded information directly into the keyboard.

European Patent Application No. 0 863 477 to Alps Electric Ltd. discloses a hybrid smart card/magnetic card reader, particularly for computer keyboards or electronic point of sale devices. PCT Published Patent Application WO 97/50027 to Ure discloses a keyboard, utilizing a high-speed multiplexed serial connection protocol, with multiple peripheral devices incorporated into the keyboard, such as a PC card reader, a Card Bus reader, a magnetic stripe reader, and a smart card reader. U.S. Patent No. 6,081,207 to Batio discloses a retrofitting, folding, portable keyboard for a notebook computer consisting of two, pivotably assigned halves, which may include an integrated memory card reader.

Individuals desiring to utilize a memory card in a consumer electronic device must ensure that it is compatible with the memory card reader. Interchangeability between the different memory cards is not possible, and if a user utilizes a camera with different memory card storage format than the memory card reader accepts, the user only has the option of purchasing a new input device (digital camera) with the corresponding compatible memory format, or replacing the memory card reader with one compatible with the new input device.

Accordingly, a need exists for an input device that has an integrated memory card reader which is able to accept multiple memory card formats.

### BRIEF DESCRIPTION OF THE DRAWINGS

FIG. 1 illustrates a block diagram of a computing system according to an embodiment of the present invention;
Fig. 2 illustrates an information input device including an integrated multiple memory card reader according to an embodiment of the present invention;
Fig. 3 illustrates an alternative information input device with an integrated multiple memory card reader according to an embodiment of the present invention;
Fig. 4 illustrates an information input device including an integrated multiple memory card reader and an actuation device according to an embodiment of the present invention; and
Fig. 5 illustrates a location of the card operation indicator device in the information input device according to an embodiment of the present invention.

### DETAILED DESCRIPTION

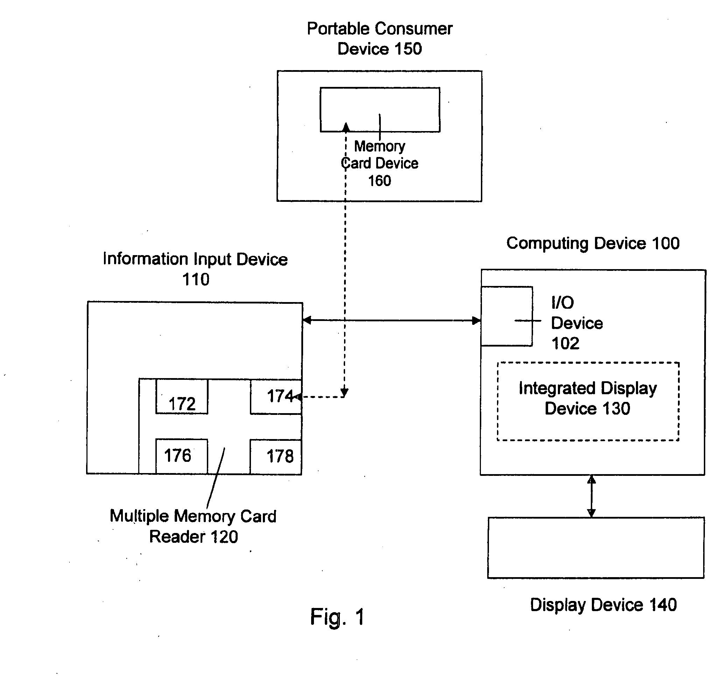

FIG. 1 illustrates a block diagram of a computing system according to an embodiment of the present invention. The computing system may include a computing device 100 and an information input device 110, with the information input device 110 including an integrated multiple memory card reader 120. The computing device 100 may include an integrated display device 130. Alternatively, a display device 140 may be external to the computing body and may communicate with the computing device 100 via any of a plurality of known data transmission methods.

The computing device 100 may be, for example, a personal computer, a server, a laptop computer, an industrial personal computer, a game console, a personal digital assistant (PDA), a Pocket personal computer (PocketPC), or any other similar devices.

The computing device 100 may communicate with the information input device 110 via an RS-232C-compatible interface using the RS-232C protocol. Alternatively, the computing device 100 may communicate with the information input device 110 via a Universal Serial Bus (USB)-compatible interface using the USB protocol. In another alternative embodiment of the present invention, the computing device 100 may communicate with the information input device 110 utilizing wireless communications technology using the Bluetooth protocol, or other suitable protocols.

In one embodiment of the present invention, the information input device 110 may be a standard computer keyboard. In an alternative embodiment of the present invention, the information input device 110 may be an enhanced computer keyboard. In another embodiment, the information input device 110 may be a joystick or a keypad. In another embodiment, the information input device 110 may be a Personal Digital Assistant keyboard.

A user of a portable consumer device 150 may want to transfer files from the portable consumer device 150 to the computing system. The portable consumer device 150 may include, for example, a digital music player (MP3, etc.), a PDA, a cell phone, a GPS receiver, or a digital camera. Illustratively, the files may include a music file, a word processing document, a digital image, GPS coordinates or positioning data, or cell phone subscriber information.

The portable consumer device 150 may include a memory card writing/reading device 160, which stores the file on a memory card in one of many different formats. For example, the memory card writing/reading device 160 may utilize memory cards compatible with the Compact Flash or CompactFlashII standard. In an alternative embodiment of the present invention, the memory card writing/reading device 160 may utilize memory cards compatible with the Secure Digital standard or Smart Media standard. In another embodiment, the memory card writing/reading device 160 may utilize a memory card compatible with the Multi-Media card, the Memory Stick, or the Memory Stick Duo standard.

In an embodiment of the present invention, the user removes the memory card from memory card writing/reading device 160 within the portable consumer device 150 in order to transfer the file to the computing system. Alternatively, the user may remove the memory card in order to receive a file from the computing system. The user inserts the memory card into the multiple memory card reader (MMCR) 120, which may be coupled to the information input device 110. If the MMCR 120 is in active mode, the user may place the memory card in one of a plurality of multiple memory card reader slots 172, 174, 176, and 178, one of which is compatible with the memory card. For example, if the user is utilizing a memory card conforming to the Smart Media standard, the user may place the Smart Media memory card in the MMCR slot that is physically and electrically compatible with Smart Media memory card.

After the memory card has been inserted in the MMCR 120, the information may be read from the inserted memory card utilizing commands from the computing device 100 and transmitted to the computing device 100 in a manner discussed below. The computing device 100 may receive the information and import the information into the appropriate application program. Alternatively, the computing device 100 may transfer information to the memory card inserted into the MMCR 120.

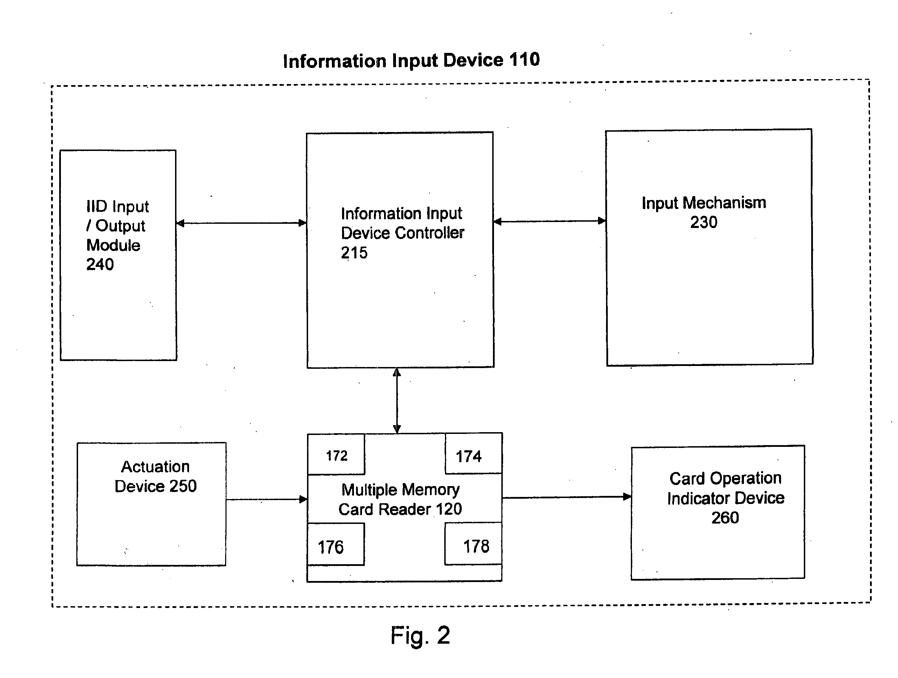

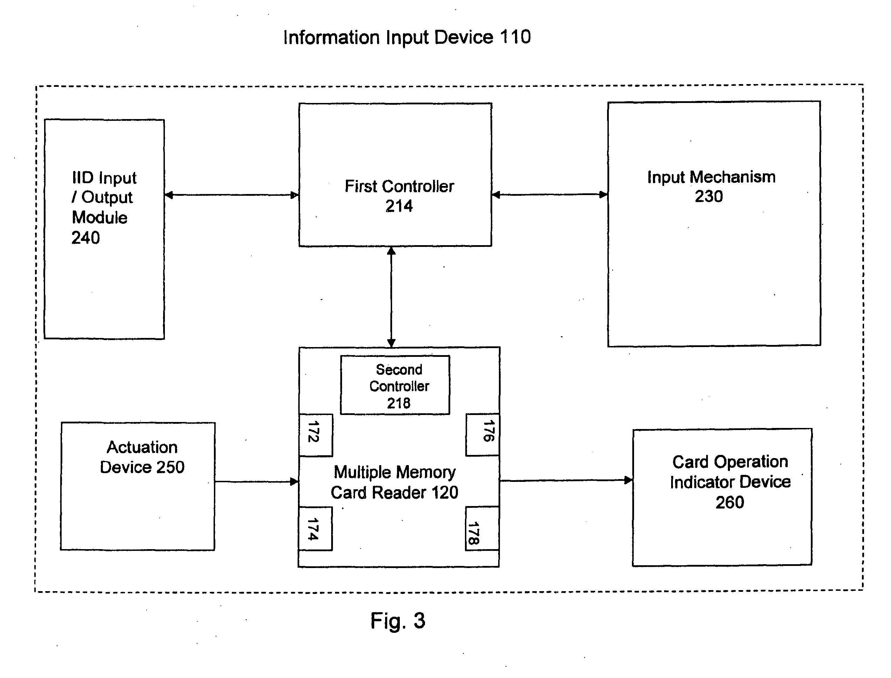

Fig. 2 illustrates an information input device including an integrated multiple memory card reader according to an embodiment of the present invention. In one embodiment of the present invention, the information input device 110 may include a multiple memory card reader 120 (MMCR), at least one input mechanism 230, an information input device controller 215, and an input/output (I/O) module 240. The MMCR 120 may include a plurality of MMCR slots 172, 174, 176, and 178. The information input device 110 may also include a MMCR actuation device 250. Further, the information input device 110 may include a card operation indicator device 260. In another embodiment of the present invention, the information input device 110 may include a second controller 270 (see Fig. 3), which interfaces directly with the MMCR. 120.

The information input device 110 may be, for example, a standard computer keyboard, a PDA keyboard, an enhanced keyboard, a game console or controller, or other similar devices. The input mechanism 230 may be a keyboard switch matrix, a pointing device, a joystick, a button, a keypad switch matrix, or other similar devices.

The integrated MMCR 120 contains a plurality of memory card slots 172. 174, 176, and 178 for receiving the plurality of memory cards that may be inserted. In one embodiment, the MMCR 220 may include four memory card slots 272, 274, 276, and 278 for four physically and electrically different memory cards. Illustratively, one slot may be able to receive either the CompactFlash or CompactFlashII memory cards; one slot may receive the Secure Digital and Smart Media memory cards; one slot may receive the Multi-Media memory cards; and one slot may receive Memory Stick or Memory Stick Duo memory cards. In one embodiment of the invention, one slot may receive the Smart Media card, the Secure Digital card or the Memory Stick / Memory Stick Duo memory card. In other embodiments of the present invention, the multiple memory card reader 120 may include a different number of memory card slots, depending on the size limitation imposed by the information input device. For example, a standard keyboard may include a MMCR 120 having four memory card slots 172, 174, 176, and 178 and a joystick may include a MMCR 120 having two memory card slots.

During initialization of the computing system, the information input device 110 including the integrated MMCR 120 may need to be initialized in order to allow communication and data transfer between the computing device 100 (see Fig. 1), the information input device 110, and the MMCR 120. The computing device 100 may communicate with the information input device 110 and the MMCR 120 according to a number of communication protocols, such as Universal Serial Bus (USB) Version 1.1, USB Version 2.0, RS232C, IDE - ATA, or other similar protocols.

For example, the communication protocol utilized for communication between the computing device 100, the information input device 110, and the MMCR 120 may be USB 1.1. When the computing device 100 is initialized, or powered up, the computing device 100 may query all of the devices electrically, optically, or physically connected to the computing device 100. Each device that is connected to the computing device 100 may be assigned an address, either during initialization or when the device is connected to the computing device 100, to allow communication between an input/output device 102 (see Fig. 1) on the computing device 100 and that device.

In an embodiment of the invention, the at least one input mechanism 230 may be assigned a first address, the MMCR 120 may be assigned a second address, and the information input device controller 215 may be assigned a third address. In an embodiment where communication between the devices utilizes the USB protocol, the information input device controller 215 may be assigned an address because it includes a USB hub. The MMCR 120 and the at least one input mechanism 230 may be assigned endpoints, in order to establish that these devices, i.e., the MMCR 120 and the at least one mechanism 230, should be polled by the computing device 100. The computing device 100 polls devices with endpoints to determine if a portion of the bus time should be allocated for data transfer or communication between the computing device 100 and these devices. The information input device controller 215 may not receive an endpoint because it is not polled due to its function mainly as a connection device.

The input mechanism 230, the MMCR 120, and the information input device controller 215 may also identify to the computing device 100 which method of data transfer each will use to communicate information to the computing device 100. Illustratively, if the actual input mechanism 230 is a keyboard switch matrix, the keyboard switch matrix in the computer keyboard may communicate that it will use an interrupt mode because only a small amount of data is transferred from the computer keyboard. The MMCR 120 may utilize bulk mode transfer, which allows communication of large data packets. The MMCR 120 may choose bulk mode transfer because large data files may be read off or written to the inserted memory cards.

After the computing system is initialized, a memory card may be inserted into one of the plurality of memory card slots 172, 174, 176 and 178 in the MMCR 120. The computing device 100 may select to read information from a particular memory card. Alternatively, the computing device 100 may select to write information to a particular memory card. A user or a software program may select one memory card or may select multiple memory cards from which to read information. In the embodiment of the invention illustrated in Fig. 2, the computing device 100 may communicate with the MMCR 120, if reading information from the memory card, by transmitting a read request from the computing device I/O port 102 (see Fig. 1) to the information input device I/O port 240, to the information input device controller 215, and finally to the MMCR 120. Illustratively, the read request signal may include the address assigned to the MMCR 120 (in order to enable the computing device I/O port 102 to direct the communication to the MMCR 120), and the specific memory card slot from which the file is to be retrieved.

The MMCR 120 may read information from the specified memory card. Illustratively, the computing device 100 may send a read or write request to retrieve or store an image file on a Memory Stick which has been inserted into the appropriate MMCR slot. If a read request is sent, the read request may include the address assigned to the MMCR 220, a memory card identifier indicating that information should be read from the appropriate memory card slot compatible with the Memory Stick, and a file identifier indicating the specific file to be retrieved.

In response to the computing device's 100 read request, the MMCR 120 may send information to the computing device 100. The retrieved information may be read off the selected memory card and transferred to the information input device controller 215. The information input device controller 215 may transmit the retrieved information to the information input device I/O module 240. The information input device I/O module 240 may transmit the retrieved information to the computing device I/O port 102, which in turn transfers the retrieved information to the requested application within the computing device 100.

In an embodiment of the present invention where the information input device 210 communicates with the computing device 100 via the USB protocol, the multiple memory card reader 120 may need to wait until the computing device 100 polls it in order to transfer data to the information input device I/O module 240 for transmittal to the computing device 100. The computing device 100 may polls all devices with endpoints, which is established during the initialization of the information input device, at periodic time intervals. In this embodiment, the two devices polled are the addresses for the input mechanism 230, e.g., the keyboard, or the multiple memory card reader 120. The hub itself is not polled.

Illustratively, if the computing device 100 sent a write request and data to be written to a memory card, the write request and the data may be transmitted from the computing device I/O device 102 to the information input device I/O module 240. The I/O module 240 may transmit the write request and data to the information input device controller 215. The information input device controller 215 may transmit the write request and the data to the memory card inserted in one of the plurality of memory card slots 172, 174, 176, or 178 of the multiple memory card reader 120. The multiple memory card reader 120 may send an acknowledgement to the computing device 100 that the data has been written to the memory card through the reverse data path that the write request and the data traveled.

The information input device controller 215 may include an updateable memory. The updateable memory may include the operating instructions for the multiple memory card reader 120. The updateable memory may be updated by the computing device 100 executing a program, which provides instructions to write information to the updateable memory. A new version of the operating instructions may be downloaded in an executable program from the Internet to the computing device 100. The computing device 100 then runs the executable program to write the new version of the operating instructions to the updatable memory in the information input device controller.

Fig. 3 illustrates an alternative information input device with an integrated multiple memory card reader according to an embodiment of the present invention. In this embodiment, the information input device 110 includes a first controller 214, a second controller 218, an actual input mechanism 230, an input/output device module 240, and a multiple memory card reader 120 (MMCR). After the computing system 100 (see Fig. 1) is initialized, a memory card may be inserted into the MMCR 120. The computing device 100 may select to read information from the memory card. A user or a software program may select one memory card or may select multiple memory cards from which to read information. In the embodiment of the invention illustrated in Fig. 3, the computing device 100 may communicate with the MMCR 120 by transmitting a read request from the computing device I/O port 102 (Fig. 1) to the information input device I/O module 240. In one embodiment of the present invention, the information input device I/O module 240 may be a USB upstream/downstream port.

The information input device I/O module 240 may receive a read or write request and transmit the read or write request to the first controller 214. The first controller 214 may receive the read or write request and transfer the read or write request to the second controller 218. The second controller 218 may receive the read or write request and transmit the read or write request to the selected memory card slot of the plurality of memory card slots 172, 174, 176 or 178 in the MMCR 120. In one embodiment of the present invention, the second controller 218 may be located within the MMCR 120. The data may be retrieved from or written to the memory card inserted into the selected memory card slot. If the computing device 100 transmitted a read request, after the data is retrieved from the selected memory card, the information may be transferred in the opposite direction along the same data path from which the read request was transmitted (memory card slot to second controller 218 to first controller 214 to information input device I/O module 240 to computing device I/O port 102 to computing device 100).

If the computing device 100 transmitted a write request and data to be written, the datapath the write request would follow may be from the computing device I/O device 102 to the information input device I/O module 240 to the first controller 214 to the second controller 218 to the selected one of the plurality of memory card slots 172, 174, 176, and 178 of the multiple memory card reader 120. If the computing device 100 transmitted a write request, after the data is written to the memory card, control signals may be transmitted in a reverse direction along the same data path.

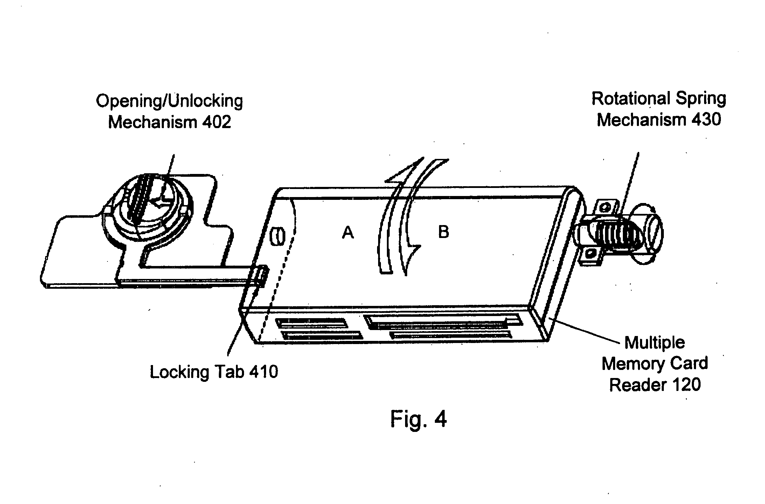

Fig. 4 illustrates an information input device including an integrated multiple memory card reader and an actuation device according to an embodiment of the present invention. The actuation device may include an opening/unlocking mechanism 402 and a rotational spring device 430, as illustrated in Fig. 4. The opening/locking mechanism 402 may be a slide switch (not shown) or a push button switch (not shown). In the embodiment of the invention where the opening/locking mechanism 402 is a slide switch, the user may move the slide switch to the left, as illustrated in Fig. 4, which may disengage a locking tab 410 from the multiple memory card reader 120. In the embodiment of the invention where the opening/locking mechanism 402 is a push button device, the user may depress the push button switch to disengage the locking tab 410 from the multiple memory card reader 120.

The rotational spring device 430 may be located on the underside (below the centerline) of the multiple memory card reader 120 and run the entire length of the multiple memory card reader 120. The rotational spring device 430 may exert a torque to pop-up the multiple memory card reader 120. The opening/locking mechanism 402 may hold and restrain the torque exerted by the rotational spring mechanism 430. Once, the locking tab 410 of the opening/locking mechanism 402 is disengaged from the multiple memory card reader 120, the rotational spring mechanism's 430 torque pops up the multiple memory card reader 120, in an A direction, into an active mode. The multiple memory card reader 120 may pop up to a position between 20 to 160 degrees relative to a top surface of the information input device.

The multiple memory card reader 120 may be placed in a non-active position by the actuation device. The top of the multiple memory card reader 120 may be moved in a B direction, as illustrated by Figure 4, until the multiple memory card reader 120 rests below the top surface of the information input device 110 (see Fig. 1). Pushing against the top of the multiple memory card reader 120 exerts a torque in resistance to the torque exerted by the rotational spring device 430. Once the top surface of the multiple memory card reader 120 is below the top surface of the information input device 110, the opening/locking mechanism 402 may be either depressed (in the case of the push button switch) or moved to the right (in terms of the slide switch) to engage the locking tab 410 of the opening/locking mechanism 402 with the multiple memory card reader 120 and place the multiple memory card reader 120 in a non-active mode.

In an alternative embodiment of the present invention, the actuation device may include a latching mechanism (not shown) and a rotational spring mechanism 430. In this embodiment, the forward edge of the top surface of the multiple memory card reader 120 may be depressed to disengage the latching mechanism. The disengagement of the latching mechanism may allow the rotational spring assembly 430 to pop up the multiple memory card reader in an A direction in the manner described above. The multiple memory card reader 120 may be placed in a non-active position by pressing on the forward edge of the top surface of the multiple memory card reader 120 and moving it in a B direction, as illustrated by Fig. 4, until the latching mechanism is engaged.

In an alternative embodiment of the present invention, the latching mechanism could be replaced by a cover device which may slide from left to right or right to left over the multiple memory card reader 120 top surface in order to restrain the torque of the rotational spring mechanism 430 and prevent the multiple memory card reader 120 from "popping up." Alternatively, the cover device may be slid up or down over the multiple memory card reader 120 top surface. In order to restrain the rotational spring mechanism 430, the cover device is preferably made of a strong, durable material which does not degrade due to the pressure placed on it by the rotational spring mechanism 430.

By utilizing the actuation device 400, the MMCR 120 may "pop-up" and be placed into active mode. In one embodiment of the present invention, the MMCR 420 when in active mode may be "popped-up" in a position which is perpendicular (approximately 90 degrees) relative to the information input device's 110 top surface. In another embodiment of the present invention, the MMCR 120 in active mode may be "popped-up" in a position that is between 45 to 90 degrees relative to the information input device's 110 top surface. Once the multiple memory card reader 120 is placed in active mode, the memory card may be placed in one of the plurality of multiple memory card reader slots 172, 174, 176, and 178 in the MMCR 120 that is compatible with the memory card.

The information input device 110 may also include a card operation indicator device 260 (see Fig. 2). The card operation indicator device 260 may include a plurality of indicators, corresponding to the number of memory card slots in the multiple memory card reader, which indicate the memory card from which the computing device 100 is receiving data or to which the computing device 100 is writing. For example, in the embodiment of the present invention where four memory card slots are located within the MMCR 120, four LEDs may be included in the card operation device 260. An LED located in the card operation indicator device 260 may light up to indicate the memory card is being utilized, e.g., reading from or writing to. Thus, the user may visually determine if the memory card has been inserted into the MMCR 120 correctly and if the MMCR 120 is reading data from or writing data to the memory card in the correct fashion.

In an embodiment of the invention, the MMCR 120 may be activated by utilizing the actuation device, as discussed previously. For example, a push button may be depressed and the MMCR 120 may "pop-up" to a position approximately 90 degrees relative to the information input device 110. In one embodiment of the present invention, only one memory card may be active at any time. In another embodiment of the present invention, more than one memory card may be active at any time. The indicator in the card operation indicator device 260 corresponding to a memory card may be activated once the corresponding memory card is inserted. For example, if the memory stick memory card reader slot receives a Memory Stick, the card indicator of the card operation indicator device 260 corresponding to the Memory Stick may emit a green light.

In one embodiment of the invention, if a memory card is corrupted or one of the plurality of MMCR slots 172, 174, 176, and 178 is not operating correctly, the corresponding memory card indicator on the card operation indicator device 260 may show a second type of signal. For example, if a Smart Media card is corrupted or the Smart Media slot on the MMCR 120 is not operating properly, a green light may blink repeatedly or a red light may be emitted.

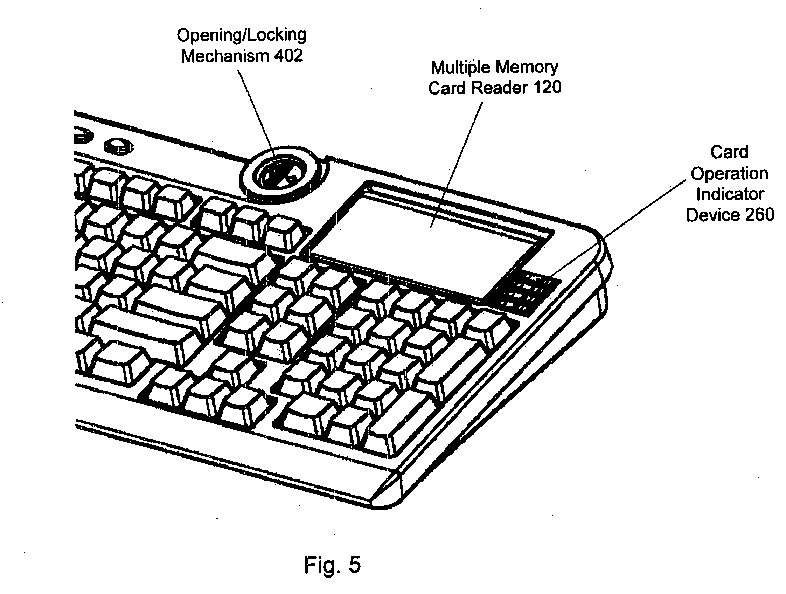

Fig. 5 illustrates a location of the card operation indicator device in the information input device according to an embodiment of the present invention. The card operation indicator device 260 may be located on the upper right side of the information input device 110, below the MMCR 120. Once all of the requested information has been transferred off the memory card, the corresponding one of a plurality of memory card indicators on the card operation indicator device 260 may be deactivated, i.e., the light may turn off.

While the description above refers to particular embodiments of the present invention, it will be understood that many modifications may be made without departing from the spirit thereof. The accompanying claims are intended to cover such modifications as would fall within the true scope and spirit of other embodiments of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are intended to be embraced therein.

## Claims

1. An information input device, comprising
an input mechanism to enter a first information set into the information input device,
an input/output (I/O) module to communicate with a computing device, and
a multiple memory card reader coupled to the information input device to receive a second information set from a memory card inserted into one of a plurality of memory card slots and to transfer the second information set to the I/O module.

2. The information input device of claim 1, wherein the information input device is a keyboard and the input mechanism is a keyboard switch matrix.

3. The information input device of claim 1, wherein the information input device is a keyboard and the input mechanism is a pointing device.

4. The information input device of claim 1, wherein the information input device is a game controller and the input mechanism is a joystick.

5. The information input device of claim 1, wherein the information input device is a game controller and the input mechanism is a button.

6. The information input device of claim 1, wherein the information input device is a numeric keypad and the actual input mechanism is a keypad switch matrix.

7. The information input device of claim 1, further including:
an information input device controller to receive the second information set from the multiple memory card reader and to transmit the received second information set to the I/O module.

8. The information input device of claim 7, wherein the information input device controller includes a universal serial bus (USB) hub, and the computing device assigns the USB hub, the input mechanism, and the multiple memory card reader separate device addresses.

9. The information input device of claim 1, further including:
a second controller to receive the second information set from the multiple memory card reader and to transmit the second information set; and
a first controller to receive the second information set from the second controller and to transmit the second information set to the I/O module.

10. The information input device of claim 9, wherein the first controller and the second controller each includes a universal serial bus (USB) hub, and the computing device assigns each USB hub, the input mechanism, and the multiple memory card reader separate device addresses.

11. The information input device of claim 1, further including a smart card reader.

12. The information input device of claim 1, further including an actuation device to place the multiple memory card reader in an active position.

13. The information input device of claim 12, wherein the active position of the multiple memory card reader is a position between 20 to 160 degrees relative to a top surface of the information input device.

14. The information input device of claim 12, wherein the actuation device includes an opening/locking mechanism to unlock the multiple memory card reader and a rotational spring mechanism to pop-up the multiple memory card reader.

15. The information input device of claim 14, wherein the opening/locking mechanism is a push button switch integrated within the information input device, and the push button switch includes a locking tab.

16. The information input device of claim 14, wherein the opening/locking mechanism is a slide switch which is pushed either right or left to unlock the multiple memory card reader and to allow the multiple memory card reader to move to an active position.

17. The information input device of claim 12, wherein the actuation device includes a latching mechanism to latch the multiple memory card reader and a rotational spring mechanism to pop-up the multiple memory card reader.

18. The information input device of claim 12, wherein the actuation device includes a door mechanism to contain the multiple memory card reader and a rotational spring mechanism to pop-up the multiple memory card reader.

19. The information input device of claim 1, wherein a plurality of memory cards are inserted into the plurality of the multiple memory card reader slots.

20. The information input device of claim 19, wherein at least two of the plurality of memory cards are active at one time.

21. The information input device of claim 1, further including a card operation indicator device with a plurality of indicators, wherein one of the plurality of indicators emit a steady light when the memory card is inserted in one of the plurality of corresponding memory card slots.

22. The information input device of claim 21, wherein one of the plurality of indicators emit a blinking light if the memory card inserted in one of the plurality of corresponding memory card slots is not operating properly, or a memory cards is inserted incorrectly in one of the plurality of corresponding multiple memory card reader slot.

23. The information input device of claim 1, wherein the multiple memory card reader can read a plurality of memory card types including at least two of a Compact Flash memory card, a Compact Flash II memory card, a Smart Media memory card, a Secure Digital memory card, a Multi Media Card memory card, a Memory Stick or Memory Stick Duo memory card, and an IBM MicroDrive card.

24. An information input device, comprising:
an input mechanism to enter a first information set into the information input device;
an input/output (I/O) module to communicate with a computing device; and
a multiple memory card reader coupled to the information input device to receive a second information set from the I/O module and to transfer the second information set to a memory card inserted into one of a plurality of memory card slots.

25. The information input device of claim 24, further including:
an information input device controller to receive the second information set from the I/O module and to transmit the received second information set to the multiple memory card reader.

26. The information input device of claim 24, further including:
a first controller to receive the second information set from the I/O module to transmit the second information set; and
a second controller to receive the second information set from the first controller and to transmit the second information set to a memory card inserted into one of a plurality of memory card slots.

27. The information input device of claim 24, further including an actuation device to place the multiple memory card reader in an active position.

28. The information input device of claim 27, wherein the actuation device includes an opening/locking mechanism to unlock the multiple memory card reader and a rotational spring mechanism to pop-up the multiple memory card reader.

29. The information input device of claim 24, further including a card operation indicator device with a plurality of indicators, wherein one of the plurality of indicators emit a steady light when the memory card is inserted in one of the plurality of corresponding memory card slots.

30. A computing system, comprising:
a computing device; and
an information input device, including
a input mechanism to enter a first information set into the information input device,
an input/output (I/O) module to communicate with the computing device, and
a multiple memory card reader coupled to the information input device to receive a second information set from a memory card inserted into one of a plurality of memory card slots and to transfer the second information set to the I/O module.

31. The computing system of claim 30, further including an external display device coupled to the computing device.

32. The computing system of claim 30, wherein the information input device further includes an information input device controller to receive the second information set from the multiple memory card reader and to transmit the received second information set to the I/O module.

33. The computing system of claim 30, wherein the information input device further includes
a second controller to receive the second information set from the multiple memory card reader and to transmit the second information set, and
a first controller to receive the second information set from the second controller and to transmit the second information set to the I/O module.

34. The computing system of claim 30, wherein the information input device further includes an actuation device to place the multiple memory card reader in an active position.

35. The computing system of claim 30, wherein the information input device further includes a card operation indicator device with a plurality of indicators wherein one of the plurality of indicators emits a steady light when the memory card is inserted in one of the plurality of corresponding memory card slots.

36. A method of operating a multiple memory card reader in an information input device, comprising:
inserting a memory card in one of a plurality of memory card reader slots housed within the multiple memory card reader coupled to the information input device;
reading information from the memory card and transferring the information to an information input device controller; and
transferring the information from the information input device controller to an input/output module.

37. The method of claim 36, wherein an indicator on a card operation indicator device corresponding to the one of the plurality of memory card slots where the memory card is inserted emits a light when the multiple memory card is inserted into the one of the plurality of memory card reader slots.

38. The method of claim 36, further including placing the multiple memory card reader in an active mode by utilizing an actuation device.

39. The method of claim 38, further including depressing a push button switch to disengage a locking tab from the multiple memory card reader and to allow a rotational spring mechanism to exert torque to pop-up a multiple memory card reader.

40. The method of claim 38, further including moving a slide switch to disengage a locking tab from the multiple memory card reader and to allow a rotational spring mechanism to exert torque to pop-up a multiple memory card reader.

41. The method of claim 38, further including unlatching a latching assembly from the multiple memory card reader to allow a rotational spring mechanism to exert torque to pop-up a multiple memory card reader.

42. The method of claim 38, further including moving a door cover assembly to allow a rotational spring mechanism to exert torque to pop-up a multiple memory card reader.

43. A method of operating a multiple memory card reader in an information input device, comprising:
inserting a memory card in one of a plurality of memory card reader slots housed in the multiple memory card reader coupled to the information input device;
transferring information from an input/output (I/O) module to an information input device controller;
transferring the information from the information input device controller to the memory card inserted into one of a plurality of memory card reader slots.

44. The method of claim 43, wherein an indicator on a card operation indicator device corresponding to one of the plurality of memory card slots emits a light when the multiple memory card is inserted into the one of the plurality of memory card reader slots.

45. The method of claim 43, further including placing the multiple memory card reader in an active mode by utilizing an actuation device.
